# EUROPEAN PATENT SPECIFICATION

(11) **EP 0 988 687 B1**
(45) Date of publication and mention of the grant of the patent: **30.07.2008**
(21) Application number: 98928698.4
(22) Date of filing: 20.05.1998
(51) Int. Cl.: H02M 1/092, H02H 7/10

(54) **A METHOD FOR COMMUNICATION BETWEEN A LOW POTENTIAL LEVEL AND A VALVE LOCATED ON HIGH VOLTAGE POTENTIAL IN A HIGH VOLTAGE CONVERTER STATION AS WELL AS A DEVICE FOR SUCH A COMMUNICATION**
VERFAHREN ZUR KOMMUNIKATION ZWISCHEN EINEM NIEDERSPANNUNGSNIVEAU UND EINEM AM HOCHSPANNUNGSNIVEAU ANGEORDNETEN VENTIL EINER HOCHSPANNUNGSUMFORMERANLAGE SOWIE VORRICHTUNG FÜR SOLCHE KOMMUNIKATION
PROCEDE DE COMMUNICATION ENTRE UN NIVEAU DE POTENTIEL BAS ET UNE VANNE A NIVEAU DE POTENTIEL HAUT DANS UNE STATION DE CONVERSION HAUTE TENSION ET DISPOSITIF DESTINE A UNE TELLE COMMUNICATION

(30) Priority: 11.06.1997 SE 9702219
(43) Date of publication of application: 29.03.2000
(60) Divisional application: 08156580.6
(73) Proprietor: ABB AB, 721 83 Västerås (SE)
(72) Inventor: NYBERG, Krister, S-777 00 Smedjebacken (SE); BJÖRKLUND, Hans, S-771 43 Ludvika (SE); ASPLUND, Gunnar, S-773 32 Ludvika (SE); SILJESTRÖM, Roland, S-772 50 Grängesberg (SE); AASTRÖM, Urban, S-772 04 Saxdalen (SE)
(74) Representative: Olsson, Jan
(86) International application number: PCT/SE1998/000943
(87) International publication number: WO 1998/057416

(56) References cited:
- DE-A- 19 533 968
- US-A- 5 027 434
- PATENT ABSTRACTS OF JAPAN, Vol. 7, No. 136, (E-181); & JP,A,58 051 769 (KANSAI DENRIYOKU K.K.) 26 March 1983.

## Description

The present invention relates to a method according to the preamble of the appended claim 1 as well as a device for communication between low potential level and a valve located on high voltage potential level in a high voltage converter station, said valve having a plurality of valve units each having at least one semiconductor component of turn-on type and for each semiconductor component a first control unit located on high voltage potential level and controlling the component, said first control units being connected to a valve control unit located on low potential level through light conductors for sending signals associated with a change of the conducting state of the respective semiconductor component between the valve control unit and the respective first control unit while separating them galvanically.

"Signals associated with a change of the conducting state of the respective semiconductor component" is to be interpreted as comprising all types of signals that in converter stations of this type may be sent between the valve control unit and the respective first control unit in connection with a change of the conducting state of the respective semiconductor component, in which it in the case of thyristors is a question about so called firing or indication signals both sent in connection with turning a thyristor on, and for semiconductor components in the form of IGBT's it is a question about firing signals and indication signals sent in connection with turning off or short-circuiting.

Such high voltage converter stations may for example be stations in plants for transmitting electric power through High Voltage Direct Current (HVDC) for converting the direct voltage into alternating voltage and conversely, but the invention is not restricted thereto, but it is directed to all types of high voltage converter stations, in which high voltage here typically may be voltages within the range 10-500 kV. Each valve unit has usually a plurality of semiconductor components of turn-on type connected in series, such as thyristors, IGBT's or the like, which are controlled simultaneously, so that they act as one single switch, and among which the voltage to be held by the valve unit in a turned-off state of said semiconductor components is distributed, since they normally only can hold 1-5 kV.

Although it is mentioned in the claims that the valve has first control units the invention also comprises the case of a directly light controlled turning-on of the semiconductor components in question, in which the first control units then principally only conduct light pulses further to the semiconductor component in question.

In already known such devices in high voltage converter stations defined in the introduction the two light conductors extending between the valve control unit and the respective first control unit are only used for communication between the electronic units on low potential level and the individual semiconductor components, such as thyristors and IGBT's, for turning on and possibly re-turning on of thyristors and "turning on" and short circuit indication, respectively, of the IGBT's. Any additional communication does not exist between low potential level and said valve located on high voltage potential level of said high voltage converter stations.

However, possibilities to an extended communication between high voltage potential level and low potential level in such valves are as such a desire, but such communication is complicated as a consequence of the high potential level on which the valve is located. The greater knowledge about the state of said valve the greater will of course the possibility to keep the high costs caused by drop out of parts of a high voltage converter station or the entire station during a certain period of time down be.

Document JP58051769 discloses a method and a device that reduce the size of a thyristor converter inexpensively by providing light distributors at the ends of a light transmission line for transmitting a plurality of light signals in both directions, thereby reducing the number of optical fibers. According to the method, when a gate signal generator generates a light signal, the signal is transmitted through an optical fiber, a light distributor, an optical fiber, a light distributor and an optical fiber to a gate unit. A light signal generated at a voltage detection light emitting unit is, on the other hand, transmitted in a direction opposite to a firing signal through an optical fiber, the light distributor and the fiber, and is further transmitted through the distributor and an optical fiber to a voltage detection photodetector. The optical fiber is used to transmit the signal in both directions, with the result that the number of the optical fibers between the different potentials can be largely reduced.

### SUMMARY OF THE INVENTION

The object of the present invention is to provide a device and a method of the type defined in the introduction, which make it possible to improve the possibilities to information exchange between low potential level and high voltage potential level of a high voltage converter station by simple means.

This object is according to the invention obtained by providing a method according to the appended claim 1 and a device according to claim 6.

Thus, the invention is based on the understanding that the light conductors already there between low potential level and high voltage potential level of such a high voltage converter station should be possible to utilise for sending serial messages or telegrams therebetween in the periods of time during which no other signals, such as different types of indication pulses and firing pulses, are sent on these light conductors. A possibility to comfortable and reliable communication between low potential level and high voltage potential level with a low energy consumption is by this achieved with very simple means and by that to a low cost.

Contrarily to the invention, the device and method in JP58051769 fail in disclosing the use of an indication signal, which states that the semiconductor component in question is ready for being turned-on, to the valve control unit and the sending of a serial message on the light conductor associated with the respective first control unit is synchronised with said indication signal.

According to a preferred embodiment of the invention the device comprises members adapted to determine when said light conductors are free from signals associated with said change of conducting state and to provide said means with information thereabout. It is by this ensured that no messages or parts of messages are sent simultaneously as the signals associated with a change of the conducting state, so that disturbances of the controlling of the semiconductor components may safely be avoided.

According to another preferred embodiment of the invention, which is applicable to a converter station, in which the respective first control unit is adapted to send an indication signal on light conductors connected thereto, which states that the semiconductor component is ready for turning-on, to the valve control unit, said members are adapted to determine the point of time for sending such indication signals and to ensure synchronising of the sending of serial messages of said means with the sending of such indication signals by controlling it to send said messages or parts thereof in the time closely after the sending of an indication signal. By synchronising the sending of serial messages from high voltage potential level to low potential level in this way with said indication signals, it is ensured that never any part of or such a message is sent simultaneously as such an indication signal and disturbs the sending thereof. This synchronising is important, since said high voltage converter stations usually are connected to alternating voltage networks, which are asynchronous, i.e. the net frequency varies, which also means an asynchronous turning-on of the different semiconductor components of the converter station, so that any type of coupling between the signals associated with a change of the conducting state and the signals forming said serial message gets necessary for ensuring that the light conductor in question is really free for transfer of information when there is a wish to send said serial message. By sending this message or parts thereof in the time closely after sending of an indication signal the period of time between two consecutive indication signals may also be utilised in the best possible way for sending a message or a part thereof.

According to another preferred embodiment of the invention said means are adapted to send a serial start and stop code, respectively, on said light conductors before and after each message sent thereby in periods of time during which the light conductors are free from signals associated with a change of the conducting state of the semiconductor component. The receiver of the message is by this given reliable information telling that a message is now coming and the message now ends.

According to another preferred embodiment of the invention said members are adapted to determine when the signal intended for the turning-on of the respective semiconductor component is sent from the valve control unit to the respective first control unit and provide said means with information thereabout for synchronising the sending of said serial message with said turn-on signal. It is by this possible to send such serial messages without any intermixing of the firing signal and the serial message from low potential level to high voltage potential level, and by synchronising the sending in this direction with exactly the turn-on or firing signals and not only with the indication signals, it may with certainty be ensured that then a part of a message sent will not disturb the basic function of the light conductors, i.e. the firing in the case of a possible re-firing of the semiconductor component in question.

According to another very preferred embodiment of the invention said means are adapted to send one bit at the time on the light conductor in question in each interval between the sending of two consecutive signals associated with a change of the conducting state of the semiconductor component in question on this light conductor. By sending one bit of information at the time between two such signals, i.e. per period, a maximum reliability is achieved in the sense that there is never a risk of coming into conflict with the normal firing function of the semiconductor component. Another important advantage of sending one bit at the time is that the power consumption gets very low when sending such messages. It is most often neither any problem that the data transmission is not particularly fast, since there are no particularly high demands on response times for this type of data transmission, primarily between the different positions in the valve and the electronic on ground.

According to another preferred embodiment of the invention said means are adapted to send said serial messages in the form of signals of a lower level than the signals associated with the change of the conducting state of the respective semiconductor component for checking if the light margin of the latter is sufficient. By sending said message in this way one knows that the light margin of the signals associated with a change of conducting state is sufficiently large as long as the data transmission functions correctly and conversely that the light margin is too small should there be any problem with the data transmission.

According to another preferred embodiment of the invention said means are located in the respective first control unit and said means are adapted to receive function parameters of the valve measured on high voltage potential level and after processing thereof send information thereabout in the form of said serial message to a valve supervising arrangement located on low potential level. The device may by this be utilised to improve the knowledge on ground level about the state of the valve by receiving information coming directly from high voltage potential level, so that measures required may be taken rapidly after occurrence of different types of faults and costs may by that be saved.

The advantages of a method according to the invention and the different embodiments thereof defined in the appended method claims appear clearly from the above discussion relating to a device according to the invention.

Additional advantages as well as advantageous features of the invention will appear from the following description and the other dependent claims.

### BRIEF DESCRIPTION OF THE DRAWING

With reference to the appended drawing, below follows a description of preferred embodiments of the invention cited as examples.

In the drawing:
Fig 1 is a simplified diagram illustrating the principle of the function of a device according to a preferred embodiment of the invention, and
Fig 2 is a graph illustrating how data transmission may take place in the device according to Fig 1 for three different embodiments thereof.

### DETAILED DESCRIPTION OF PREFERRED EMBODIMENTS OF THE INVENTION

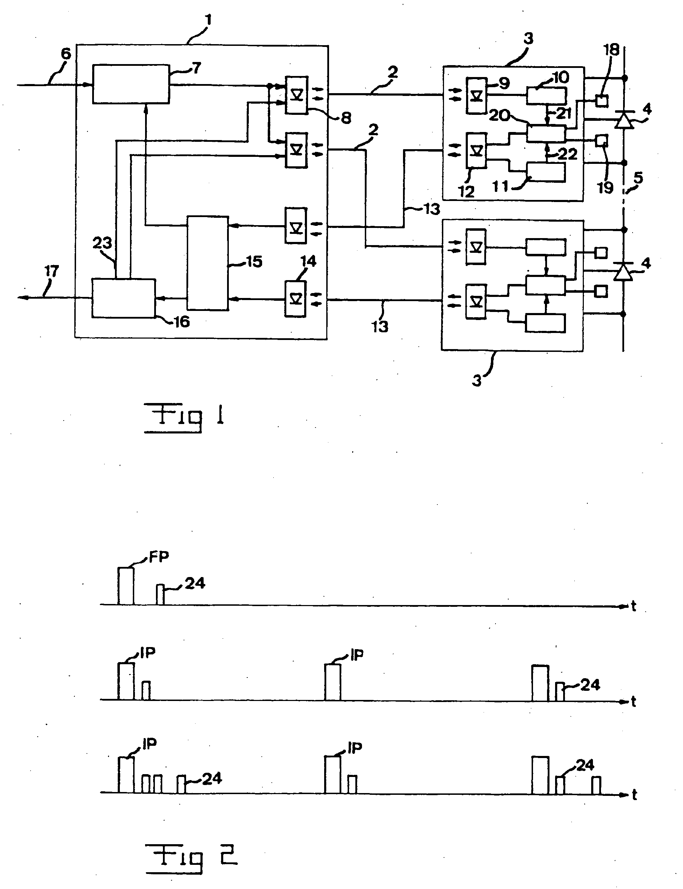

The general construction of a valve of a high voltage converter station, for example for converting High Voltage Direct Current (HVDC) into alternating current and conversely and a valve control unit associated therewith are schematically illustrated in Fig 1, as well as schematically how the invention may be realised. The valve control unit 1 is in the converter stations adapted to communicate through light conductors 2, i.e. opto-cables, with control units 3 for controlling semiconductor components 4 of turn-on type belonging to valve units, such as thyristors, in which said control then only relates to firing, and IGBT's, in which the control then also comprises turn-off. A greater number of such semiconductor components are usually connected in series within one single valve unit and intended to be controlled simultaneously through a control unit 3 each, which is indicated through the dashed line at 5. A valve consists in its turn of a plurality of such valve units. We will for the sake of simplicity in the description now following assume that the semiconductor components consist of thyristors which may not be turned off, although the invention is not in any way restricted thereto.

The valve control unit 1 is located on low voltage potential level, i.e. on earth, and it receives in a conventional way a control pulse through an input 6 to a logic circuit 7 for normal turning-on or a firing, which sends a firing signal FP (see Fig 2) further to different light emitting diodes 8 so as to make the light conductors 2 to send firing signals to all the thyristor control units 3 being apart of the valve unit. The thyristor control units have photo diodes 9 adapted to receive the firing signals and through a firing circuit 10 act upon the gate of the thyristor 4 for taking care of a turning-on of the thyristor. The thyristor control unit has in a conventional way also a circuit 11 for sending an indication pulse IP (see Fig 2) to light emitting diodes 12 and further through light conductors 13 to photo diodes 14 of the valve control unit so as to indicate that the voltage across the thyristor in question in the forward biasing direction thereof is sufficient for making a turn-on possible to take place rapidly and efficiently with low power losses during the firing step.

The indication pulses go further through a logic circuit 15, the function of which will be explained further below, to the circuit 7 so as to control the sending of a firing pulse thereby. The valve control unit 1 has also a logic circuit 16 for supervising the different positions of the valve for sending them from the valve control unit through a supervising bus 17.

Except from a particular arrangement of the circuits 15 and 16 the features described above are part of the prior art. The characterising features of the invention will now be described.

Members 18, 19 adapted to detect function parameters of the valve on high voltage potential level and send values detected thereby to the thyristor control units 3 are here arranged in the vicinity of each of the thyristors. Furthermore, means 20 in the form of micro computer consuming a weak current is arranged in each thyristor control unit and adapted to process the values detected by the members 18 and 19. This means 20 is connected with the light emitting diodes 12 so as to send information resulting from said processing through the light conductors 13. The sending of these data is synchronised with the sending of firing- and/or indication pulses, which is indicated by the arrows 21, 22, and will be explained more in detail below with reference to Fig 2. The signals coming from the light conductors 13 to the valve control unit are filtrated in the logic circuit 15 for indication pulses, so that the indication pulses are sent on to the circuit 7 while the data emanating from the means 20 are sent further to the supervising arrangement 16 for a suitable treatment therein.

The supervising arrangement has also an output 23 connected with the light conductors 2 through the light emitting diodes 8 for sending messages to the thyristor control units 3, such as for example additional firing pulses so as to check the function of the different thyristors.

Since the signals sent with the change of the conducting state of the thyristor on the light conductors 2, 13, i.e. firing and indication signals are constituted by short pulses, the two light conductors between the valve control unit and each thyristor control unit are normally both very badly utilised, and they are also comparatively difficult to utilise for another communication as a consequence of the asynchronous networks usually connected to such a converter station. However, these light conductors are here utilised for sending serial messages between high voltage potential level and low potential level. This takes place by utilising the time directly after sending an indication pulse by the circuit 11 and the light emitting diode 12 towards low potential and the firing pulse through the circuit 7 and the light emitting diode 8 towards the thyristors, respectively, to send serial messages or telegrams between the individual positions in the valve and the electronic system on earth. Said positions of the valve, the function parameters of which may be detected by the members 18 and 19, may for example be the temperature of the thyristor or a medium for cooling thereof, the status of voltage dividers arranged close to the thyristor, leakage of the cooling medium in a system for cooling the respective thyristor and the presence of smoke.

It is in the upper part illustrated in Fig 2 how a firing pulse FP is sent on the light conductor 2 and in the time closely thereafter a data bit 24, which has a lower level than the firing pulse and is eventually sent only for checking if there is a sufficient light margin of the firing pulse, the reception of this date bit 24 of the thyristor control unit may result in a sending back of suitable data through said means 20 to the supervising arrangement 16 on low potential.

It is illustrated in the middle of Fig 2 how an indication pulse IP is sent on a light conductor 13 and immediately thereafter a data bit, in which during three consecutive periods the binary data bits 101 are sent. Thus, a firing pulse and an indication pulse, respectively, is "start pulse" for a message. It is emphasised that the graphs shown for the firing pulse and the indication pulse are not connected with each other, but the sending of the indication pulse and the firing pulse are in the practice following each other. The advantages of sending a bit of data per period have thoroughly been penetrated above. The so called one bit system functions just as well for conventional line-commutated thyristor valves as for VSC valves with IGBT's. The difference is that there will in conventional valves be a bit frequency of 50-60 Hz and for the VSC valves a bit frequency just as high as the PWM (Pulse Width Modulation)-frequency, which for example may mean about 2 kHz. The protocol of the one bit system is suitably constructed according to the NRZI-coding well known in field bus context, with the start and stop bit code 01111110. For avoiding confusion of the start/stop bit during the data transmission a zero is preferably put into a message when there are more than five consecutive ones.

The one bit system has a very low power consumption and is usually sufficiently fast, but should the demands on transfer speed increase, it is of course possible to send more data bits per period, even possibly the entire message. This is then paid by an increased power consumption, more expensive opto-components and at last but not less the risk to enter into conflict with the basic function of the opto-system, i.e. the firing and a possible re-firing of the valve. However, the opto-component usually already there in the high voltage converter stations may be used for data transfer when the one bit system is used. The case of a transmittance of four data bits per period synchronised with sending an indication pulse IP is illustrated in Fig 2, in which the data current sent over the three periods illustrated is the following: 110110001001.

For being able to supervise the firing channel also when the valve is connected to voltage but blocked the method described in PCT/SE93/00662 is used for communicating with and firing a semiconductor component at the time. A complete control of the valve also in the blocked and voltage connected position is obtained in this way.

The invention is of course not in any way restricted to the embodiments described above, but many possibilities to modifications thereof will be apparent to a man skilled in the art, without departing from the scope of the invention as defined in the claims.

It would for example be possible that the invention is directly applied on semiconductor components fired by light, in which then messages are sent from high voltage potential level to low potential level.

Besides the alternatives mentioned above the converter station on which the invention is applied could be in the form of a Static Var Compensator (SVC).

## Claims

1. A method for communication between low potential level and a valve located on high voltage potential level in a high voltage converter station, said valve having a plurality of valve units each having at least one semiconductor component (4) of turn-on type and for each semiconductor component a first control unit (3) located on high voltage potential level and controlling the component, said first control units being connected to a valve control unit (1) located on low potential level through light conductors (2, 13) for sending signals (FP, IP) associated with a change of the conducting state of the respective semiconductor component between the valve control unit and the respective first control unit while separating them galvanically, in which serial messages are sent on the respective light conductor between the valve and the low potential level in periods of time during which the light con-ductors are free from signals associated with turning-on of the semiconductor components, **characterized in that** an indication signal (IP), which states that the semiconductor component (4) in question is ready for being turned-on, to the valve control unit (1), is sent by the first control unit, and **in that** the sending of the serial message on the light conductor (2, 13) associated with the respective first control unit is synchronised with said indication signal.

2. A method according to claim 1,
**characterized in that** it is detected when a said signal (FP, IP) has been sent and a part of or the entire message is sent thereafter before the next such signal is sent.

3. A method according to any of clams 1 or 2,
**characterized in that** the sending of said serial message on the light conductor (2, 13) associated with the respective first control unit (3) is synchronised with a signal sent to the respective first control unit for turning on the semiconductor component associated therewith.

4. A method according to any of claims 1-3,
**characterized in that** one bit of said serial message is sent at the time on the respective light conductor (2, 13) in the interval between two consecutive signals sent on this light conductor and associated with a change of the conducting state of the semiconductor component in question.

5. method according to any of claims 1-4,
**characterized in that** said serial message is sent in the form of signals having a lower level than said signals associated with changes of the conducting state of the semiconductor components for checking the light margin of the latter signals.

6. A device for communication between low potential level and a valve of a high voltage converter station located on high voltage potential level, said valve having a plurality of valve units each having at least one semiconductor component (4) of turn-on type and for each semiconductor component a first control unit (3) located on high voltage potential level and controlling this component, said first control units being associated with a valve, control unit (1) located on low potential level through light conductors (2, 13) for sending signals (FP, IP) associated with a change of the conducting state of the respective semiconductor component between the valve control unit and the respective first control unit while separating them galvanically, wherein the device has means (20) adapted to send serial messages on said light conductors between the valve and a low potential level in periods of time during which the respective light conductor is free from said signals associated with said turning-on, and said device comprises members (22) adapted to determine when said light conductors are free from signals associated with said change of conducting state and to provide said means (20) with information thereabout, **characterized in that** the respective first control unit (3) is adapted to send an indication signal (IP) on the light conductor connected thereto, -said signal indicating that the semiconductor component (4) is ready to be turned on, to the valve control unit (1), and **in that** said members (11, 22) are adapted to determine the point of time for sending such indication signals and to ensure a synchronising of the sending of serial messages of said means (20) with the sending of such indication signals by controlling it to send said messages or parts thereof in the time close after the sending of one indication signal.

7. A device according to claim 6,
**characterized in that** said means (20) are adapted to send a serial start and stop code, respectively, on said light conductors before and after each message sent thereby in periods of time during which the light conductors (2, 13) are free from signals associated with a change, of the conducting state of the semiconductor component.

8. A device according to claim 6,
**characterized in that** said members are adapted to determine when the signal intended for the turning-on of the respective semiconductor component is sent from the valve control unit to the respective first control unit and provide said means with information thereabout for synchronising the sending of said serial message with such a turn-on signal.

9. A device according to any of claims 6-8,
**characterized in that** said means (20) are adapted to send one bit (24) at the time on the light conductor (13) in question in each interval between the sending of two consecutive signals associated with a change of the conducting state of the semiconductor component (4) in question on this light conductor.

10. A device according to any of claims 6-9,
**characterized in that** said means (20) are adapted to send said serial message in the form of signals of a lower level than the signals associated with the change of the conducting state of the respective semiconductor component for checking if the light margin of the latter is sufficient.

11. A device according to any of claims 6-10,
**characterized in that** said means (20) are located in the respective first control unit (3) and that said means are adapted to receive function parameters of the valve measured on high voltage potential level and after processing thereof send information thereabout in the form of said serial message to a valve supervising arrangement (16) located on low potential level.

12. A device according to claim 11,
**characterized in that** said means (20) are adapted to send information to the supervising arrangement (16) about at least one of the following function parameters: the temperature of the semiconductor component or of a medium for cooling thereof, the status of a voltage divider arranged at the semiconductor component, leakage of cooling medium of a system for cooling the respective semiconductor component and the presence of smoke.

13. A device according to claim 11 or 12,
**characterized in that** it comprises a filter (15) located on low potential level and adapted to separate signals associated with a change of the conducting state of the respective semiconductor component from signals belonging to said serial messages.

## Patentansprüche

1. Verfahren zur Kommunikation zwischen niedrigem Potentialniveau und einem auf Hochspannungs-Potentialniveau befindlichen Gleichrichter in einer Hochspannungs-Wandlerstation, wobei der Gleichrichter eine Vielzahl von Gleichrichtereinheiten mit jeweils mindestens einer Halbleiterkomponente (4) vom Einschalttyp und für jede Halbleiterkomponente eine auf Hochspannungs-Potentialniveau befindliche und die Komponente steuernde erste Reglereinheit (3) aufweist, wobei die ersten Reglereinheiten mit einer auf niedrigem Potentialniveau befindlichen Gleichrichter-Reglereinheit (1) verbunden sind durch Lichtleiter (2, 13) zum Senden von Signalen (FP, IP) zwischen der Gleichrichter-Reglereinheit und der jeweiligen ersten Reglereinheit, die mit einer Änderung des Leitungszustandes der jeweiligen Halbleiterkomponente verknüpft sind, während sie diese galvanisch trennen, in welchem serielle Mitteilungen auf dem jeweiligen Lichtleiter zwischen dem Gleichrichter und dem niedrigen Potentialniveau in Zeiträumen gesendet werden, während welcher die Lichtleiter von mit dem Einschalten der Halbleiterkomponenten verknüpften Signalen frei sind,
**dadurch gekennzeichnet, dass** ein Anzeigesignal (IP), welches meldet, dass die fragliche Halbleiterkomponente (4) zur Einschaltung bereit ist, von der ersten Reglereinheit zu der Gleichrichter-Reglereinheit (1) gesendet wird,
und **dadurch**, dass das Senden der seriellen Nachricht auf dem mit der jeweiligen ersten Reglereinheit verknüpften Lichtleiter (2, 13) mit dem Anzeigesignal synchronisiert ist.

2. Verfahren gemäß Anspruch 1,
**dadurch gekennzeichnet, dass** festgestellt wird, wenn ein Signal (FP, IP) gesendet wurde, und danach die gesamte Nachricht oder ein Teil davon gesendet wird, bevor das nächste solche Signal gesendet wird.

3. Verfahren gemäß irgendeinem der Ansprüche 1 oder 2,
**dadurch gekennzeichnet, dass** das Senden der seriellen Nachricht auf dem mit der jeweiligen ersten Reglereinheit (3) verknüpften Lichtleiter (2, 13) mit einem zu der jeweiligen ersten Reglereinheit gesendeten Signal zum Einschalten der damit verknüpften Halbleiterkomponente synchronisiert ist.

4. Verfahren gemäß irgendeinem der Ansprüche 1 bis 3,
**dadurch gekennzeichnet, dass** jeweils ein Bit der seriellen Nachricht auf dem jeweiligen Lichtleiter (2, 13) in der Pause zwischen zwei auf diesem Lichtleiter gesendeten und mit einer Änderung des Leitungszustandes der fraglichen Halbleiterkomponente verknüpften, aufeinander folgenden Signalen gesendet wird.

5. Verfahren gemäß irgendeinem der Ansprüche 1 bis 4,
**dadurch gekennzeichnet, dass** die serielle Nachricht in der Form von Signalen mit einem niedrigeren Niveau als die mit Änderungen des Leitungszustandes der Halbleiterkomponenten verknüpften Signale ausgesendet wird, um den Licht-Spielraum der letzteren Signale zu prüfen.

6. Vorrichtung zur Kommunikation zwischen niedrigem Potentialniveau und einem auf Hochspannungs-Potentialniveau befindlichen Gleichrichter einer Hochspannungs-Wandlerstation, wobei der Gleichrichter eine Vielzahl von Gleichrichtereinheiten mit jeweils mindestens einer Halbleiterkomponente (4) vom Einschalttyp und für jede Halbleiterkomponente eine auf Hochspannungs-Potentialniveau befindliche und diese Komponente steuernde erste Reglereinheit (3) aufweist, wobei die ersten Reglereinheiten mit einer auf niedrigem Potentialniveau befindlichen Gleichrichter-Reglereinheit (1) verknüpft sind durch Lichtleiter (2, 13) zum Senden von Signalen (FP, IP) zwischen der Gleichrichter-Reglereinheit und der jeweiligen ersten Reglereinheit, die mit einer Änderung des Leitungszustandes der jeweiligen Halbleiterkomponente verknüpft sind, wobei sie diese galvanisch trennen, wobei die Vorrichtung Mittel (20) hat, die dazu angepasst sind, serielle Mitteilungen auf den Lichtleitern zwischen dem Gleichrichter und dem niedrigen Potentialniveau in Zeiträumen zu senden, während welcher der jeweilige Lichtleiter von den mit dem Einschalten verknüpften Signalen frei ist, und die Vorrichtung Elemente (22) umfasst, die dazu angepasst sind, zu bestimmen, wann die Lichtleiter von mit einer Änderung des Leitungszustandes verknüpften Signalen frei sind und die Mittel (20) mit Information darüber zu versehen,
**dadurch gekennzeichnet, dass** die jeweilige erste Reglereinheit (3) dazu angepasst ist, auf dem damit verbundenen Lichtleiter ein Anzeigesignal (IP) zu der Gleichrichter-Reglereinheit (1) zu senden, wobei das Signal anzeigt, dass die Halbleiterkomponente (4) zur Einschaltung bereit ist,
und **dadurch**, dass die Elemente (11, 22) dazu angepasst sind, den Zeitpunkt zum Senden solcher Anzeigesignale zu bestimmen und eine Synchronisation der Aussendung von seriellen Nachrichten der Mittel (20) mit dem Aussenden solcher Anzeigesignale sicher zu stellen, indem sie diese dazu ansteuern, die Nachrichten oder Teile davon in der Zeit dicht nach dem Senden von einem Anzeigesignal auszusenden.

7. Vorrichtung gemäß Anspruch 6,
**dadurch gekennzeichnet, dass** die Mittel (20) dazu angepasst sind, auf den Lichtleitern vor und nach jeder mit ihnen gesendeten Nachricht in Zeiträumen während welcher die Lichtleiter (2, 13) von mit einer Änderung des Leitungszustandes der Halbleiterkomponente verknüpften Signalen frei sind, einen seriellen Start- beziehungsweise Haltecode zu senden.

8. Vorrichtung gemäß Anspruch 6,
**dadurch gekennzeichnet, dass** die Elemente dazu angepasst sind, zu bestimmen wann das für das Einschalten der jeweiligen Halbleiterkomponente bestimmte Signal von der Gleichrichter-Reglereinheit zu der jeweiligen ersten Reglereinheit gesendet wird, und die Mittel zum Zweck des Synchronisierens der Aussendung der seriellen Nachricht mit einem solchen Einschaltsignal mit Information hierüber zu versorgen.

9. Vorrichtung gemäß irgendeinem der Ansprüche 6 bis 8,
**dadurch gekennzeichnet, dass** die Mittel (20) dazu angepasst sind, jeweils ein Bit (24) auf dem fraglichen Lichtleiter (13) in jeder Pause zwischen dem Aussenden von zwei aufeinander folgenden, mit einer Änderung des Leitungszustandes der fraglichen Halbleiterkomponente (4) verknüpften Signalen auf diesem Lichtleiter zu senden.

10. Vorrichtung gemäß irgendeinem der Ansprüche 6 bis 9,
**dadurch gekennzeichnet, dass** die Mittel (20) dazu angepasst sind, die serielle Nachricht in der Form von Signalen mit einem niedrigeren Niveau als die mit der Änderung des Leitungszustandes der Halbleiterkomponenten verknüpften Signale auszusenden, um zu prüfen ob der Licht-Spielraum der letzteren Signale ausreichend ist.

11. Vorrichtung gemäß irgendeinem der Ansprüche 6 bis 10,
**dadurch gekennzeichnet, dass** die Mittel (20) sich in der jeweiligen ersten Reglereinheit (3) befinden und dass die Mittel dazu angepasst sind, auf dem Hochspannungs-Potentialniveau gemessene Funktionsparameter des Gleichrichters zu empfangen und nach deren Verarbeitung Information darüber in der Form der seriellen Nachricht zu einer auf niedrigem Potentialniveau befindlichen Gleichrichter-Überwachungseinheit (16) auszusenden.

12. Vorrichtung gemäß Anspruch 11,
**dadurch gekennzeichnet, dass** die Mittel (20) dazu angepasst sind, Information über mindestens einen der folgenden Funktionsparameter an die Gleichrichter-Überwachungseinheit (16) auszusenden: die Temperatur der Halbleiterkomponente oder eines Mediums zu deren Kühlung, den Zustand eines an der Halbleiterkomponente angeordneten Spannungsteilers, Ausfließen von Kühlmedium eines Systems zum Kühlen der jeweiligen Halbleiterkomponente und die Anwesenheit von Rauch.

13. Vorrichtung gemäß Anspruch 11 oder 12,
**dadurch gekennzeichnet, dass** sie ein Filter (15) umfasst, das sich auf niedrigem Potentialniveau befindet und dafür angepasst ist, mit einer Änderung des Leitungszustandes der jeweiligen Halbleiterkomponente verknüpfte Signale von Signalen zu trennen, die zu den seriellen Nachrichten gehören.

## Revendications

1. Procédé de communication entre un niveau de potentiel bas et une valve située à un niveau de potentiel de tension haut dans une station de conversion haute tension, cette valve ayant une pluralité d'unités de valve ayant chacune au moins un composant semi-conducteur (4) de type déblocable et pour chaque composant semi-conducteur une première unité de commande (3) située à un niveau de potentiel de tension haut et commandant le composant, ces premières unités de commande étant connectées à une unité de commande de valve (1) située à un niveau de potentiel bas à travers des conducteurs de lumière (2, 13) pour envoyer des signaux (FP, IP) associé à un changement d'état de conduction du composant semi-conducteur respectif entre l'unité de commande de valve et la première unité de commande respective tout en les séparant de façon galvanique, dans lequel des messages série sont envoyés sur le conducteur de lumière respectif entre la valve et le niveau de potentiel bas dans des périodes de temps pendant lesquelles les conducteurs de lumière sont libres des signaux associés avec le déblocage des composants semi-conducteurs, **caractérisé en ce que** la première unité de commande envoie vers l'unité de commande de valve (1) un signal indicatif (IP), qui indique que le composant semi-conducteur (4) en question est prêt pour être débloqué, et **en ce que** l'envoi du message série sur le conducteur de lumière (2, 13) associé à la première unité de commande respective est synchronisé avec ledit signal indicatif.

2. Procédé selon la revendication un, **caractérisé en ce qu'**on détecte lorsqu'un tel signal (FP, IP) a été envoyé et tout ou partie du message est envoyée par la suite avant qu'un tel prochain signal ne soit envoyé.

3. Procédé selon l'une quelconque des revendications 1 ou 2, **caractérisé en ce que** l'envoi du message série sur le conducteur de lumière (2, 13) associé à la première unité de commande (3) respective est synchronisé avec un signal envoyé vers la première unité de commande respective pour débloquer le composant semi-conducteur qui y est associé.

4. Procédé selon l'une quelconque des revendications 1-3, **caractérisé en ce qu'**un bit à la fois dudit message série et d'envoyer sur le conducteur de lumière (2, 13) respectif dans un intervalle entre deux signaux consécutifs envoyés sur ce conducteur de lumière est associé à un changement de l'État de conduction du composant semi-conducteur en question.

5. Procédé selon l'une quelconque des revendications 1-4, **caractérisé en ce que** ledit message série est envoyé sous la forme de signaux ayant un niveau plus bas que les signaux associés aux changements d'état de conduction des composants semi-conducteurs de façon à vérifier la marge de lumière des derniers signaux.

6. Dispositif de communication entre un niveau de potentiel bas et une valve d'une station de conversion haute tension située à un niveau de potentiel de tension haut, cette valve ayant une pluralité d'unités de valve ayant chacune au moins un composant semi-conducteur (4) de type déblocable et pour chaque composant semi-conducteur une première unité de commande (3) située à un niveau de potentiel de tension haut et commandant ce composant, ces premières unités de commande étant associées à une unité de commande de valve (1) située à un niveau de potentiel bas à travers des conducteurs de lumière (2, 13) pour envoyer des signaux (FP, IP) associé à un changement d'état de conduction du composant semi-conducteur respectif entre l'unité de commande de valve et la première unité de commande respective tout en les séparant de façon galvanique, dans lequel le dispositif comprend des moyens (20) adaptés pour envoyer des messages série sur les conducteurs de lumière entre la valve et un niveau de potentiel bas dans des périodes de temps pendant lesquelles le conducteur de lumière respectif est libre des signaux associés avec le déblocage, et ce dispositif comprend des organes (22) adaptés à déterminer le moment où les conducteurs de lumière sont libres des signaux associés audit changement d'état de conduction et à fournir aux dits moyens (20) une information correspondante, **caractérisé en ce que** la première unité de commande (3) respective est adaptée pour envoyer vers l'unité de commande de valve (1) un signal indicatif (IP) sur le conducteur de lumière qui y est connecté, ce signal indiquant que le composant semi-conducteur (4) est prêt à être débloqué, et **en ce que** les organes (11, 22) sont adaptés pour déterminer l'instant pour envoyer de tels signaux indicatifs et pour assurer une synchronisation de l'envoi des messages série desdits moyens (20) avec l'envoi de tels signaux indicatifs en les commandant d'envoyer ses messages ou une partie d'eux dans un court instant après l'envoi d'un signal indicatif.

7. Dispositif selon la revendication 6, **caractérisé en ce que** lesdits moyens (20) sont adaptés pour envoyer un code de départ et d'arrêt série, respectivement, sur lesdits conducteurs de lumière avant et après chaque message envoyé ainsi dans des périodes de temps pendant lesquelles les conducteurs de lumière (2, 13) sont libres des signaux associés à un changement de l'état de conduction du composant semi-conducteur.

8. Dispositif selon la revendication six, **caractérisé en ce que** les organes sont adaptés pauvres déterminer le moment où le signal prévu pour le déblocage du composant semi-conducteur respectif est envoyé depuis une unité de commande de valve vers la première unité de commande respective et fournissent aux dits moyens une information correspondante pour la synchronisation de l'envoi du message série avec un tel signal de déblocage.

9. Dispositif selon l'une quelconque des revendications 6-8, **caractérisé en ce que** lesdits moyens (20) sont adaptés pour envoyer un bit (24) à la fois sur le conducteur de lumière (13) en question dans chaque intervalle entre l'envoi de deux signaux consécutifs associés à un changement de l'état de conduction du composant semi-conducteur (4) en question sur ce conducteur de lumière.

10. Dispositif selon l'une quelconque des revendications 6-9, **caractérisé en ce que** lesdits moyens (20) sont adaptés pour envoyer ce message série sous la forme de signaux d'un niveau plus bas que les signaux associés aux changements de l'état de conduction du composant semi-conducteur respectif pour vérifier si la marge de lumière de ces derniers est suffisant.

11. Dispositif selon l'une quelconque des revendications 6-10, **caractérisé en ce que** lesdits moyens (20) sans disposer dans la première unité de commande (3) respective et **en ce que** lesdits moyens sont adaptés pour recevoir des paramètres de fonction de la valve mesurés à un niveau de potentiel de tension haut et après traitement de cela, pour envoyer une information correspondante sous la forme dudit message série vers un équipement de supervision (16) de valve situé à un niveau de potentiel bas.

12. Dispositif selon la revendication 11, **caractérisé en ce que** lesdits moyens (20) sont adaptés pour envoyer une information vers l'équipement de supervision (16) à propos d'au moins l'un des paramètres de fonction suivants : la température du composant semi-conducteur ou d'un milieu pour le refroidir, l'état d'un diviseur de tension disposé sur le composant semi-conducteur, la fuite du milieu de refroidissement d'un système pour refroidir le composant semi-conducteur respectif et la présence de fumée.

13. Dispositif selon la revendication 11 ou 12, **caractérisé en ce qu'**il comprend un filtre (15) situé à un niveau de potentiel bas est adapté pour séparer des signaux associés à un changement d'état de conduction du composant semi-conducteur respectif des signaux appartenant aux dits messages série.
